# EUROPEAN PATENT APPLICATION

(11) **EP 4 113 865 A1**
(43) Date of publication of application: **04.01.2023**
(21) Application number: 21888354.4
(22) Date of filing: 08.10.2021
(51) Int. Cl.: H04B 10/275

(54) **PACKET TRANSPORT NETWORK (PTN)-BASED METHOD AND SYSTEM FOR OPTIMIZATION OF LOOPING OF ACCESS LAYER DEVICES**

(30) Priority: 05.11.2020 CN 202011222415
(71) Applicant: Wuhan Fiberhome Technical Services Co., Ltd, Wuhan, Hubei 430205 (CN); Hubei University Of Technology, Wuhan, Hubei 430068 (CN); Fiberhome Telecommunication Technologies Co., Ltd, Wuhan, Hubei 430205 (CN)
(72) Inventor: XU, Aibo, Wuhan, Hubei 430205 (CN); WEI, Ming, Wuhan, Hubei 430205 (CN); JIN, Congyuan, Wuhan, Hubei 430205 (CN); YU, Han, Wuhan, Hubei 430205 (CN); WANG, Junfang, Wuhan, Hubei 430205 (CN); WANG, Chunzhi, Wuhan, Hubei 430205 (CN); GUAN, Sha, Wuhan, Hubei 430205 (CN); LIU, Aijun, Wuhan, Hubei 430205 (CN); LIU, Jinhang, Wuhan, Hubei 430205 (CN); YAN, Lingyu, Wuhan, Hubei 430205 (CN)
(74) Representative: Lohmanns Lohmanns & Partner mbB
(86) International application number: PCT/CN2021/122566
(87) International publication number: WO 2022/095657

(57) **Abstract**

The present invention relates to a packet transport network (PTN)-based method and system for optimization of looping of access layer devices. The method comprises: acquiring network resource information of PTN networking; determining whether there are optical fibers connected between each network element on an i-th long chain and each network element on a loop where the i-th long chain is located; if so, calculating the gain gₘₙ of the optical fiber; when the gain of each of the optical fibers is a non-positive value, or there is no optical fiber, adding optical fibers between the network elements on the i-th long chain and the network elements on the loop where the i-th long chain is located; according to the added optical fibers, switching services passing through a first network element and a second network element on the i-th long chain; when the gains of all the optical fibers are not all non-positive values, according to the gain of each of the optical fibers, switching services passing through the optical fibers between the network elements of the i-th long chain and the network elements of the loop where the i-th long chain is located; and sequentially switching services passing through the optical fibers between the network elements of each long chain and the network elements of the loop where the long chain is located, so as to complete looping optimization of access layer devices of PTN networking. The present invention can improve the looping rate, thereby improving the network security.

## Description

### Field of the Invention

The present invention relates to the field of packet transport network optimization, in particular to a packet transport network (PTN)-based method and system for optimization of looping of access layer devices.

### Background of the Invention

With the popularization of intelligent terminals, human society has entered the era of mobile Internet, which can transmit large-capacity information, and the transmission of information cannot be separated from the transmission channel of information-bearer network. The bearer network is a private network constructed by various operators to bear various voice and data services, usually using optical fibers as the transmission medium.

At this stage, PTN networking is introduced into the bearer network. The existing PTN adopts a three-layer network structure, comprising: access layer, aggregation layer and core layer. During the process of network operation, whether a device forms a loop or not has a huge impact on network stability. The device that does not form a loop may affect a large number of mobile services when a single-point line or equipment failure occurs. Therefore, making the network into the loop as much as possible has become an important operation to improve network security.

During the process of PTN networking configuration, most of the access layer devices will form the loop, and the condition for forming the loop is that there are at least two completely non-repetitive paths which are finally connected to the aggregation layer device. However, there will still be a small number of access layer devices that do not form the loop, which will affect a large number of services when the network is turbulent.

### Summary of the Invention

The purpose of the present invention is to provide a packet transport network (PTN)-based method and system for optimization of looping of access layer devices, so as to improve the looping rate, thereby improving the network security.

In order to achieve the above purposes, the present invention adopts the following technical solutions:
a PTN-based method for optimization of looping of access layer devices, comprising the following steps:
acquiring network resource information of PTN networking; wherein the network resource information comprises PTN network element information, link information where a non-looped network element is located and loop information where a long chain is located; the PTN network element information comprises network element parameters, service usage classification and network element evaluation results, and whether each network element forms a loop is displayed in the network element evaluation results; the link information where the non-looped network element is located comprises link parameters and link evaluation results, and whether each link is a long chain is displayed in the link evaluation results; and the loop information where the long chain is located comprises loop parameters and loop evaluation results, and whether each loop is a giant loop is displayed in the loop evaluation results;
for an i-th long chain, determining whether there is an optical fiber connected between each network element on the i-th long chain and each network element on a loop where the i-th long chain is located according to the network resource information of the PTN networking;
calculating the gain gₘₙ of the optical fiber when there is the optical fiber between the m-th network element on the i-th long chain and the n-th network element on the loop where the i-th long chain is located;
adding the optical fibers between the network elements of the i-th long chain and the network elements of the loop where the i-th long chain is located when the gain of each of the optical fibers is non-positive value, or when there is no optical fiber between all the network elements of the i-th long chain and all the network elements of the loop where the i-th long chain is located;
performing switching on services passing through a first network element and a second network element on the i-th long chain according to the added optical fibers; wherein the first network element is the network element connected to the added optical fibers, and the second network element is a next-hop network element that the first network element performs service transmission in a direction of a cross network element; and the cross network element is the network element at a cross position of the i-th long chain and the loop where the i-th long chain is located;
performing switching on services of the optical fibers between the network elements on the i-th long chain and the network elements on the loop where the i-th long chain is located according to the gain of each of the optical fibers when the gains of all the optical fibers are not all non-positive values; and
successively performing switching on services of the optical fibers between the network elements of each long chain and the network elements on the loop where the long chain is located, so as to complete looping optimization of access layer devices of the PTN networking.

Optionally, the network element parameters comprise network element level, network element name, network element type and network element IP; the link parameters comprise link ID, link node, and number of link nodes; and the loop parameters comprise loop ID, loop node, number of loop nodes, and loop master rate.

Optionally, the step of adding the optical fibers between the network elements of the i-th long chain and the network elements of the loop where the i-th long chain is located when the gain of each of the optical fibers is non-positive value, or when there is no optical fiber between all the network elements of the i-th long chain and all the network elements of the loop where the i-th long chain is located specifically comprises the following steps:
acquiring the lowermost network element of the i-th long chain and the previous network element of the cross network element;
determining whether a distance between the lowermost network element of the i-th long chain and the previous network element of the cross network element meets the distance requirement;
determining whether there is a port corresponding to an optical fiber rate between the cross network element and the previous network element of the cross network element on the lowermost network element of the i-th long chain when the distance between the lowermost network element of the i-th long chain and the previous network element of the cross network element meets the distance requirement;
adding the optical fibers between the lowermost network element of the i-th long chain and the previous network element of the cross network element when there is the port corresponding to the optical fiber rate between the cross network element and the previous network element of the cross network element on the lowermost network element of the i-th long chain;
acquiring the next network element of the cross network element when there is no port corresponding to the optical fiber rate between the cross network element and the previous network element of the cross network element on the lowermost network element of the i-th long chain, or when the distance between the lowermost network element of the i-th long chain and the previous network element of the cross network element does not meet the distance requirement;
determining whether the distance between the lowermost network element of the i-th long chain and the next network element of the cross network element meets the distance requirement;
determining whether there is the port corresponding to the optical fiber rate between the cross network element and the next network element of the cross network element on the lowermost network element of the i-th long chain when the distance between the lowermost network element of the i-th long chain and the next network element of the cross network element meets the distance requirement;
adding the optical fibers between the lowermost network element of the i-th long chain and the next network element of the cross network element when there is the port corresponding to the optical fiber rate between the cross network element and the next network element of the cross network element on the lowermost network element of the i-th long chain;
adding the port corresponding to the optical fiber rate between the cross network element and the next network element of the cross network element to the lowermost network element of the i-th long chain and adding the optical fibers between the lowermost network element of the i-th long chain and the next network element of the cross network element when there is no port corresponding to the optical fiber rate between the cross network element and the next network element of the cross network element on the lowermost network element of the i-th long chain; and
adding the optical fibers between other network elements except the lowermost network element of the i-th long chain and other network elements except the previous network element and the next network element of the cross network element on the loop where the i-th long chain is located under the premise that the gain of the added optical fibers is positive and the distance meets the distance requirement when the distance between the lowermost network element of the i-th long chain and the next network element of the cross network element does not meet the distance requirement.

Optionally, the step of performing switching on services passing through a first network element and a second network element on the i-th long chain according to the added optical fibers comprises the following steps:
switching the services of the optical fiber passing through the middle of the first network element and the second network element to the added optical fibers.

Optionally, the step of performing switching on services of the optical fibers between the network elements on the i-th long chain and the network elements on the loop where the i-th long chain is located according to the gain of each of the optical fibers when the gains of all the optical fibers are not all non-positive values comprises the following steps:
acquiring a third network element corresponding to the optical fiber with a maximum gain; wherein the third network element is the network element connected to the optical fiber with the maximum gain on the i-th long chain;
switching the services of the optical fiber passing through the middle of the third network element and a fourth network element to the optical fiber with the maximum gain; wherein the fourth network element is a next-hop network element that the third network element performs service transmission in the direction of the cross network element.

The present invention further provides a PTN-based system for optimization of looping of access layer devices, comprising:
a network resource information acquisition module, which is configured to acquire network resource information of PTN networking; wherein the network resource information comprises PTN network element information, link information where a non-looped network element is located and loop information where a long chain is located; the PTN network element information comprises network element parameters, service usage classification and network element evaluation results, and whether each network element forms a loop is displayed in the network element evaluation results; the link information where the non-looped network element is located comprises link parameters and link evaluation results, and whether each link is a long chain is displayed in the link evaluation results; and the loop information where the long chain is located comprises loop parameters and loop evaluation results, and whether each loop is a giant loop is displayed in the loop evaluation results;
an optical fiber judgment module, which is configured to, for an i-th long chain, judge whether there is an optical fiber connected between each network element on the i-th long chain and each network element on a loop where the i-th long chain is located according to the network resource information of the PTN networking;
an optical fiber gain calculation module, which is configured to calculate the gain gₘₙ of the optical fiber when there is the optical fiber between the m-th network element on the i-th long chain and the n-th network element on the loop where the i-th long chain is located;
an optical fiber addition module, which is configured to add the optical fibers between the network elements of the i-th long chain and the network elements of the loop where the i-th long chain is located when the gain of each of the optical fibers is non-positive value, or when there is no optical fiber between all the network elements of the i-th long chain and all the network elements of the loop where the i-th long chain is located;
a first service switching module, which is configured to perform switching on services passing through a first network element and a second network element on the i-th long chain according to the added optical fibers; wherein the first network element is the network element connected to the added optical fibers, and the second network element is a next-hop network element that the first network element performs service transmission in a direction of a cross network element; and the cross network element is the network element at a cross position of the i-th long chain and the loop where the i-th long chain is located;
a second service switching module, which is configured to perform switching on services of the optical fibers between the network elements on the i-th long chain and the network elements on the loop where the i-th long chain is located according to the gain of each of the optical fibers when the gains of all the optical fibers are not all non-positive values; and
a looping optimization module, which is configured to successively perform switching on services of the optical fibers between the network elements of each long chain and the network elements on the loop where the long chain is located, so as to complete looping optimization of access layer devices of the PTN networking.

Optionally, the optical fiber addition module specifically comprises:
a lowermost network element and a previous network element acquisition unit, which are configured to acquire the lowermost network element of the i-th long chain and the previous network element of the cross network element; and the cross network element is the network element at a cross position of the i-th long chain and the loop where the i-th long chain is located;
a distance requirement judgment unit, which is configured to judge whether a distance between the lowermost network element of the i-th long chain and the previous network element of the cross network element meets the distance requirement;
a port judgment unit, which is configured to judge whether there is a port corresponding to an optical fiber rate between the cross network element and the previous network element of the cross network element on the lowermost network element of the i-th long chain when the distance between the lowermost network element of the i-th long chain and the previous network element of the cross network element meets the distance requirement;
an optical fiber addition unit, which is configured to add the optical fibers between the lowermost network element of the i-th long chain and the previous network element of the cross network element when there is the port corresponding to the optical fiber rate between the cross network element and the previous network element of the cross network element on the lowermost network element of the i-th long chain;
a next network element acquisition unit, which is configured to acquire the next network element of the cross network element when there is no port corresponding to the optical fiber rate between the cross network element and the previous network element of the cross network element on the lowermost network element of the i-th long chain, or when the distance between the lowermost network element of the i-th long chain and the previous network element of the cross network element does not meet the distance requirement;
the distance requirement judgment unit is further configured to judge whether the distance between the lowermost network element of the i-th long chain and the next network element of the cross network element meets the distance requirement;
the port judgment unit is further configured to judge whether there is the port corresponding to an optical fiber rate between the cross network element and the next network element of the cross network element on the lowermost network element of the i-th long chain when the distance between the lowermost network element of the i-th long chain and the next network element of the cross network element meets the distance requirement;
the optical fiber addition unit is further configured to add the optical fibers between the lowermost network element of the i-th long chain and the next network element of the cross network element when there is the port corresponding to the optical fiber rate between the cross network element and the next network element of the cross network element on the lowermost network element of the i-th long chain; add the port corresponding to the optical fiber rate between the cross network element and the next network element of the cross network element to the lowermost network element of the i-th long chain and add the optical fibers between the lowermost network element of the i-th long chain and the next network element of the cross network element when there is no port corresponding to the optical fiber rate between the cross network element and the next network element of the cross network element on the lowermost network element of the i-th long chain; and add the optical fibers between other network elements except the lowermost network element of the i-th long chain and other network elements except the previous network element and the next network element of the cross network element on the loop where the i-th long chain is located under the premise that the gain of the added optical fibers is positive and the distance meets the distance requirement when the distance between the lowermost network element of the i-th long chain and the next network element of the cross network element does not meet the distance requirement.

Optionally, the first service switching module specifically comprises:
a first service switching unit, which is configured to switch the services of the optical fiber passing through the middle of the first network element and the second network element to the added optical fibers.

Optionally, the second service switching module specifically comprises:
a third network element acquisition unit, which is configured to acquire a third network element corresponding to the optical fiber with a maximum gain; wherein the third network element is the network element connected to the optical fiber with the maximum gain on the i-th long chain;
a second service switching unit, which is configured to switch the services of the optical fiber passing through the middle of the third network element and a fourth network element to the optical fiber with the maximum gain; wherein the fourth network element is a next-hop network element that the third network element performs service transmission in the direction of the cross network element.

According to the specific embodiments provided by the present invention, the present invention discloses the following technical effects:
Through the operations of adding optical fibers and switching service, the present invention effectively turns part of non-looped network elements in the PTN network into looped network elements, which improves the looping rate of access layer devices, improves the security and stability of the network, and ensures that part of mobile services will not be affected in the event of a failure.

### Brief Description of the Drawings

In order to better illustrate the embodiments of the present invention or the technical solutions in the prior art, the following will briefly introduce the drawings needed in the description of the embodiments, and it is obvious that the drawings in the following description are only a part of embodiments of the present application, for those of ordinary skill in the art, other drawings may also be obtained based on these drawings without any inventive effort.
Fig. 1 is a flowchart of a PTN-based method for optimization of looping of access layer devices;
Fig. 2 is a typical topology diagram of a network element of a local PTN network;
Fig. 3 is a schematic diagram of looping of an access layer device;
Fig. 4 is a schematic diagram of a process of service switching;
Fig. 5 is a flowchart of a PTN-based system for optimization of looping of access layer devices;
Fig. 6 is a flowchart of a detailed method for solving a non-looped network element.

### Detailed Description of the Embodiments

In the following, the technical solutions in the embodiments of the present invention will be clearly and completely described with reference to the drawings in the embodiments of the present invention, obviously, the described embodiments are only a part of the embodiments of the present invention, not all of the embodiments. Based on the embodiments in the present invention, all other embodiments obtained by a person of ordinary skill in the art without inventive efforts shall fall within the protection scope of the present invention.

In order to make the above purposes, features and advantages of the present invention more clearly understood, the present invention will be described in further detail below with reference to the drawings and specific embodiments.

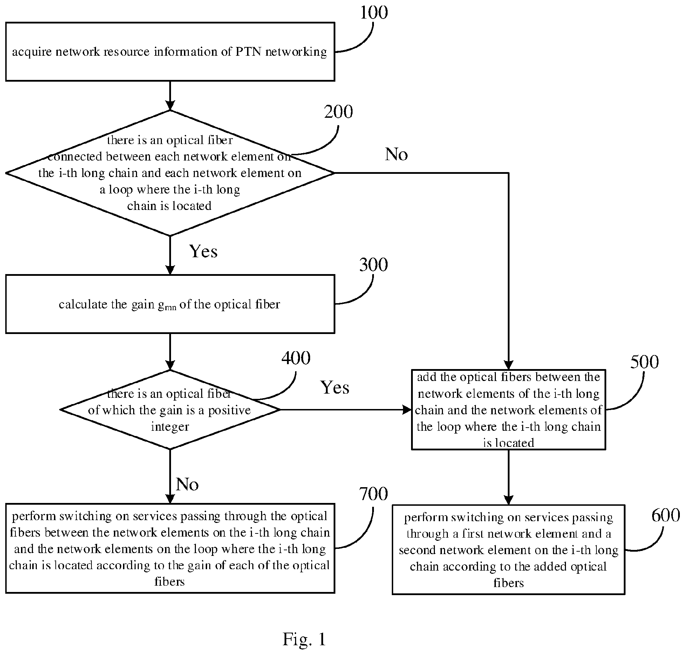

Fig. 1 is a flowchart of a PTN-based method for optimization of looping of access layer devices. As shown in Fig. 1, a PTN-based method for optimization of looping of access layer devices provided by the present invention comprises the following steps.

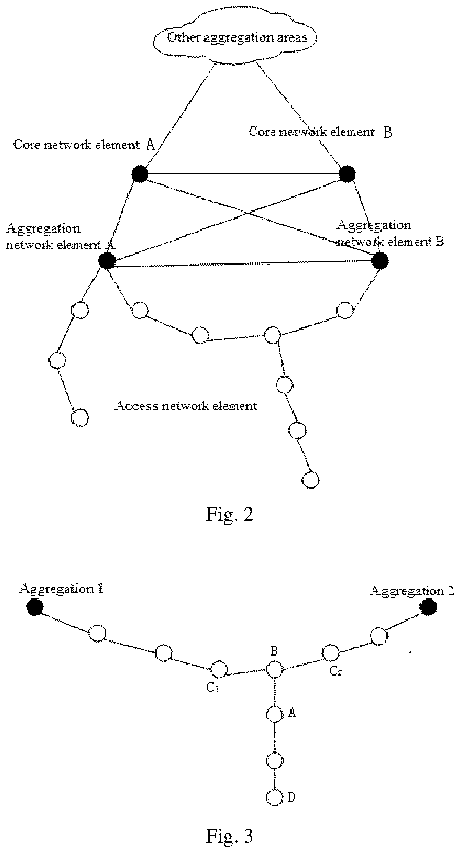

S100: Network resource information of PTN networking is acquired. Fig. 2 is a typical topology diagram of a network element of a local PTN network. As shown in Fig. 2, the collection of the PTN network resource information is the only way to generate the PTN network topology. The collected network resource information comprises PTN network element information, link information where a non-looped network element is located and loop information where a long chain is located.

Specifically, the PTN network element information comprises network element level, network element name, network element type, network element IP, service usage classification and network element evaluation result, and the network element evaluation result shows whether each network element forms a loop. The link information where the non-looped network element is located comprises link ID, link node, number of link nodes, and link evaluation result, and the link evaluation result shows whether each link is a long chain. The loop information where the long chain is located comprises loop ID, loop node, number of loop nodes, loop master rate and loop evaluation result, and the loop evaluation result shows whether each loop is a giant loop. The present invention performs looping optimization for each long chain. The specific optimization process is shown in S200 to S700.

S200: For an i-th long chain, whether there is an optical fiber connected between each network element on the i-th long chain and each network element on a loop where the i-th long chain is located is judged according to the network resource information of the PTN networking. If so, S300 is executed; and if not, S500 is executed. Specifically, each network element of the i-th long chain is traversed, and whether there is an optical fiber connected between each network element and each network element of the loop where the i-th long chain is located is successively judged; and when there is the optical fiber connected between the network element of the i-th long chain and the network element of the loop where the i-th long chain is located, S300 is executed, and the gain g of the optical fiber is continued to be calculated, after traversing each network element of the i-th long chain and all network elements of the loop where the i-th long chain is located, all the optical fibers and the corresponding gains of all the optical fibers can be obtained.

Fig. 3 is taken as an example, the information of network element B and network element D is first obtained, the previous network element C₁ and the next network element C₂ of the network element B are obtained on the loop through network element B, and whether there is the optical fiber between network element D and network element C₁ and network element C₂ are respectively judged, if there is, the gain of the optical fiber is calculated, and then the network element information and optical fiber information and the corresponding gain are recorded. Then the former of the network element C₁ is recorded as C₁, and the latter of the network element C₂ is recorded as C₂, and then whether there is the optical fiber between network element D and network element C₁ and network element C₂ is judged after updating C₁ and C₂, and the steps are iterated in turn, when network element C₁ reaches convergence 1 or network element C₂ reaches convergence 2, only the side that has not reached the convergence needed to continue to be traversed, and when both sides reach the convergences, the traversal of the network elements on the loop is completed. Then the traversal on the chain is continued to perform, and the latter of the network element D is recorded as network element D. Whether there is the optical fiber between the network element D and each network element on the loop is judged again by means of the same method as above, and the network element D will not stop traversing until to the network element B. At this point, the entire chain is traversed, and all the optical fibers between the entire long chain and the corresponding loop can be obtained. The former and latter of the network element on the loop refer to the order successively from aggregation 1 to aggregation 2 (or aggregation 2 to aggregation 1), and the former and latter of the of the network element on long chain refer to the order successively from the lowest network element to the cross network element.

S300: The gain _{gmn} of the optical fiber is calculated when there is the optical fiber between the m-th network element on the i-th long chain and the n-th network element on the loop where the i-th long chain is located. The calculation method of the gain of each of the optical fiber is: when there is the optical fiber between the network element D of the i-th long chain and the network element C₁ (or C₂) of the loop where the i-th long chain is located, the gain of the optical fiber is the number of the network elements between the network element D and cross network element B plus 1 minus the number of the network elements between the network element B and the network element C₁ (or C₂), that is, the gain of the optical fiber is the number of non-looped network elements solved by this optical fiber minus the number of network elements that cause the non-looped network elements.

S400: Whether there is an optical fiber with a gain that is a positive integer is judged. If so, S700 is executed; and if not, S500 is executed. When there is a plurality of optical fibers between the i-th long chain and the loop where the i-th long chain is located, it is necessary to judge whether there is the optical fiber with the gain that is a positive integer. In S200 to S300, the gain of the optical fiber will be calculated when it is judged that there is the optical fiber, and when the gain is a non-positive integer, the optical fiber and the gain thereof will be discarded; and when the gain is a positive integer, the optical fiber and the gain value thereof are put into a set, and finally through judging whether the set is empty, it can be judged whether there is the optical fiber with the gain that is a positive integer. If the set is empty, it means that the gain of each of the optical fiber is a non-positive value, or that there is no optical fiber between all the network elements of the i-th long chain and all the network elements of the loop where the i-th long chain is located.

S500: When there is no optical fiber with the gain that is a positive integer, an optical fiber is added between the network element of the i-th long chain and the network element of the loop where the i-th long chain is located. The specific process of adding the optical fibers is as follows:
acquiring the lowermost network element of the i-th long chain and the previous network element of the cross network element; the cross network element is the network element at a cross position of the i-th long chain and the loop where the i-th long chain is located;
determining whether a distance between the lowermost network element of the i-th long chain and the previous network element of the cross network element meets the distance requirement; satisfying the distance requirement means that the distance between the lowermost network element of the i-th long chain and the previous network element of the cross network element satisfies (less than or equal to) the maximum distance that the optical fiber can transmit;
determining whether there is a port corresponding to an optical fiber rate between the cross network element and the previous network element of the cross network element on the lowermost network element of the i-th long chain when the distance between the lowermost network element of the i-th long chain and the previous network element of the cross network element meets the distance requirement;
adding the optical fibers between the lowermost network element of the i-th long chain and the previous network element of the cross network element when there is the port corresponding to the optical fiber rate between the cross network element and the previous network element of the cross network element on the lowermost network element of the i-th long chain;
acquiring the next network element of the cross network element when there is no port corresponding to the optical fiber rate between the cross network element and the previous network element of the cross network element on the lowermost network element of the i-th long chain, or when the distance between the lowermost network element of the i-th long chain and the previous network element of the cross network element does not meet the distance requirement;
determining whether the distance between the lowermost network element of the i-th long chain and the next network element of the cross network element meets the distance requirement;
determining whether there is the port corresponding to the optical fiber rate between the cross network element and the next network element of the cross network element on the lowermost network element of the i-th long chain when the distance between the lowermost network element of the i-th long chain and the next network element of the cross network element meets the distance requirement;
adding the optical fibers between the lowermost network element of the i-th long chain and the next network element of the cross network element when there is the port corresponding to the optical fiber rate between the cross network element and the next network element of the cross network element on the lowermost network element of the i-th long chain;
adding the port corresponding to the optical fiber rate between the cross network element and the next network element of the cross network element to the lowermost network element of the i-th long chain and adding the optical fibers between the lowermost network element of the i-th long chain and the next network element of the cross network element when there is no port corresponding to the optical fiber rate between the cross network element and the next network element of the cross network element on the lowermost network element of the i-th long chain; and
adding the optical fibers between other network elements except the lowermost network element of the i-th long chain and other network elements except the cross network element and the previous network element and the next network element of the cross network element on the loop where the i-th long chain is located under the premise that the gain of the added optical fibers is positive and the distance meets the distance requirement when the distance between the lowermost network element of the i-th long chain and the next network element of the cross network element does not meet the distance requirement.

The looping diagram shown in Fig. 3 is taken as an example, when the gains of all the optical fibers are non-positive value or there is no optical fiber, it is necessary to add the optical fiber between the lowermost network element D of the long chain and the previous network element C₁ (the latter C₂) of the cross network element B on the loop to make the network elements on the long chain form a loop. First, whether the distance between the network element D and the network element C₁ meets the distance requirement is judged, and then whether there is the port on the network element D with the same rate as the optical fiber rate between the network element D and the previous network element C₁, and if the distance and the port match at the same time, the optical fiber is added herein, and this long chain is processed. When the distance is not satisfied or the distance is satisfied and the port is not satisfied, it is judged whether the optical fiber can be added between the network element C₂ and the network element D, and then the distance and port are judged in the same way, and when the distance and port are satisfied at the same time, the optical fiber is added herein, and this long chain is processed; when the distance matches but the port does not match, the port with the same rate is added to the idle card of the network element D, and then the optical fiber is added; and when the distance is not satisfied, the optical fiber can be added between other network elements of the long chain and other network elements on the loop under the condition that the final gain is positive and the distance is satisfied.

S600: According to the added optical fibers, switching is performed on services passing through a first network element and a second network element on the i-th long chain. The first network element is the network element connected to the added optical fibers, and the second network element is a next-hop network element that the first network element performs service transmission in a direction of a cross network element. Specifically, the services of the optical fiber passing through the middle of the first network element and the second network element are switched to the added optical fibers.

S700: When there are the optical fibers with gains of a positive integer, according to the gain of each of the optical fibers, switching is performed on services of the optical fibers between the network elements of the i-th long chain and the network elements of the loop where the i-th long chain is located. Specifically, first, a third network element and a fourth network element corresponding to the optical fibers with the maximum gain are obtained. The third network element is the network element connected to the optical fiber with the maximum gain on the i-th long chain, and the fourth network element is a next-hop network element that performs service transmission in the direction of the cross network element by the third network element. Then, the services of the optical fiber passing through the middle of the third network element and the fourth network element are switched to the optical fiber with the maximum gain.

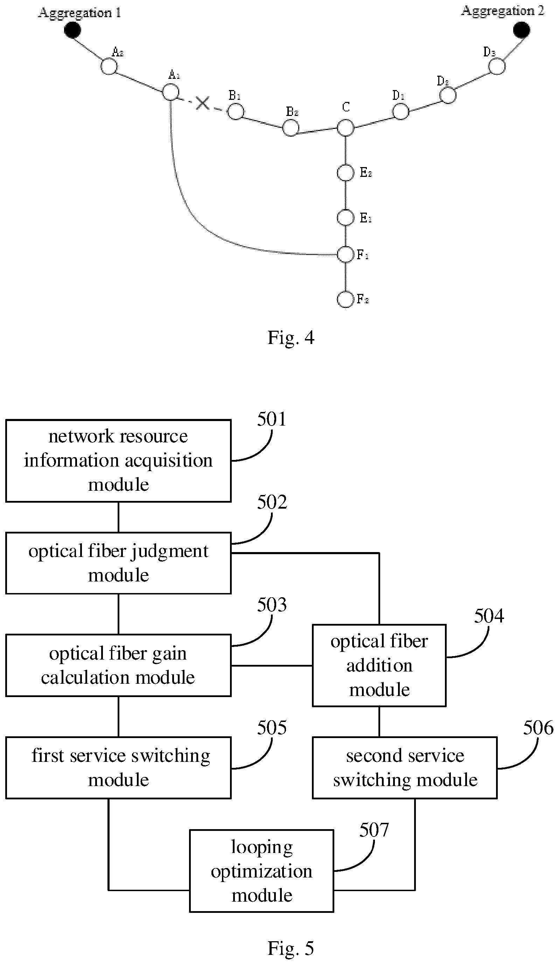

The looping diagram shown in Fig. 4 is taken as an example, the process of service switching of S600 and S700 will be described in detail. As shown in Fig. 4, it is assumed that the optical fiber between A₁ and F₁ is the optical fiber with the maximum gain value or the optical fiber added between A₁ and F₁. During the process of service switching, since there is a plurality of services passing through the chain and the loop, and each of the services passes through different routes, the starting point of the service may be different, but the end point must be the aggregation network element, so the starting point may have various situations. The starting point of the analysis services in the figure may have the following five situations: Class A (network elements A₁, A₂...Aᵢ), Class B (network elements B₁, B₂... Bᵢ), Class D (network elements D₁, D₂, D₃... Dᵢ), Class E (network elements E₁, E₂... Eᵢ), Class F (network elements F₁, F₂... Fᵢ).

For the starting point of the A-class network elements, during the process of service switching, if the end point of the tunnel (tunnel is the service) is convergence 1, no service switching is required. If the end point of the tunnel is convergence 2, when switching, it is necessary to CD delete the network elements in Class B in the tunnel, that is, delete all of the network elements between the network element A₁ and the network element C; ② modify the board card and port number of the output end of the network element A₁, and the modified board card and port number are the board card and port number of the optical fiber between A₁ and F₁ inserted on A₁; ③ insert the network element F₁ and the E-class network elements, that is, insert the network element F₁, and insert all of the network elements between F₁ and the network element C; and ④ modify the board card and port number of the input end of the network element C, and the modified board card and port number are the board card and port number of the optical fiber between C and E₂ inserted on C.

For the starting point of the B-class network elements, during the process of service switching, if the end point of the tunnel is convergence 2, no service switching is required, and if the end point of the tunnel is convergence 1, when performing service switching, it is necessary to ① delete all the network elements between Bᵢ and the network element A₁ if the starting point is B₁, insert all the network elements between the network element Bᵢ and the network element C, insert the network element C, E-class network elements and network element F₁; ② modify the board card and port number of the input end of the network element Bi, and the modified board card and port number are the board card and port number of the optical fiber between Bi and Bi inserted on Bi; and ③ modify the board card and port number of the input end of the network element A₁, and the modified board card and port number are the board card and port number of the optical fiber between A₁ and F₁ inserted on A₁.

For the starting point of the D-class network elements, during the process of service switching, if the end point of the tunnel (tunnel is the service) is convergence 1, when switching, it is necessary to ① delete all the B-class network elements; ② modify the board card and port number of the output end of the network element C, and the modified board card and port number are the board card and port number of the optical fiber between C and E₂ inserted on C; ③ insert E-class network elements and insert the network element F₁; and ④ modify the board card and port number of the input end of the network element A₁, and the modified board card and port number are the board card and port number of the optical fiber between A₁ and F₁ inserted on A₁.

For the starting point of the E-class network elements, during the process of service switching, if the end point of the tunnel is convergence 2, no service switching is required, and if the end point of the tunnel is convergence 1, when performing service switching, it is necessary to ① delete all the network elements between Eᵢ and the network element C, delete the network element C, and delete B-class network elements if the starting point is Eᵢ; ② insert the network element Eᵢ and all the network elements between the network element Eᵢ and the network element F₁, and insert the network element F₁; ③ modify the board card and port number of the input end of the network element Eᵢ, and the modified board card and port number are the board card and port number of the optical fiber between Eᵢ and Eᵢ₋₁ inserted on Eᵢ; and ④ modify the board card and port number of the input end of the network element A₁, and the modified board card and port number are the board card and port number of the optical fiber between A₁ and F₁ inserted on A₁.

For the starting point of the F-class network elements, during the process of service switching, if the end point of the tunnel is convergence 2, no service switching is required, and if the end point of the tunnel is convergence 1, when performing service switching, it is necessary to ① delete E-class network elements, delete the network element C and delete the network element B; ② modify the board card and port number of the output end of the network element F₁, and the modified board card and port number are the board card and port number of the optical fiber between A₁ and F₁ inserted on F₁; and ③ modify the board card and port number of the input end of the network element A₁, and the modified board card and port number are the board card and port number of the optical fiber between A₁ and F₁ inserted on A₁.

During the process of service switching, corresponding service switching should be performed for each long chain and each service of the loop.

Through adopting the above process, switching is successively performed on services of the optical fibers between the network elements of each long chain and the network elements on the loop where the long chain is located, so as to complete looping optimization of access layer devices of the PTN networking.

Fig. 5 is a flowchart of a PTN-based system for optimization of looping of access layer devices. As shown in Fig. 5, a PTN-based system for optimization of looping of access layer devices provided by the present invention comprises the following structures:
a network resource information acquisition module 501, which is configured to acquire network resource information of PTN networking; the network resource information comprises PTN network element information, link information where a non-looped network element is located and loop information where a long chain is located; the PTN network element information comprises network element parameters, service usage classification and network element evaluation results, and whether each network element forms a loop is displayed in the network element evaluation results; the link information where the non-looped network element is located comprises link parameters and link evaluation results, and whether each link is a long chain is displayed in the link evaluation results; and the loop information where the long chain is located comprises loop parameters and loop evaluation results, and whether each loop is a giant loop is displayed in the loop evaluation results;
an optical fiber judgment module 502, which is configured to, for an i-th long chain, judge whether there is an optical fiber connected between each network element on the i-th long chain and each network element on a loop where the i-th long chain is located according to the network resource information of the PTN networking;
an optical fiber gain calculation module 503, which is configured to calculate the gain gₘₙ of the optical fiber when there is the optical fiber between the m-th network element on the i-th long chain and the n-th network element on the loop where the i-th long chain is located;
an optical fiber addition module 504, which is configured to add the optical fibers between the network elements of the i-th long chain and the network elements of the loop where the i-th long chain is located when the gain of each of the optical fibers is non-positive value, or when there is no optical fiber between all the network elements of the i-th long chain and all the network elements of the loop where the i-th long chain is located;
a first service switching module 505, which is configured to perform switching on services passing through a first network element and a second network element on the i-th long chain according to the added optical fibers; the first network element is the network element connected to the added optical fibers, and the second network element is a next-hop network element that the first network element performs service transmission in a direction of a cross network element; and the cross network element is the network element at a cross position of the i-th long chain and the loop where the i-th long chain is located;
a second service switching module 506, which is configured to perform switching on services of the optical fibers between the network elements on the i-th long chain and the network elements on the loop where the i-th long chain is located according to the gain of each of the optical fibers when the gains of all the optical fibers are not all non-positive values; and
a looping optimization module 507, which is configured to successively perform switching on services of the optical fibers between the network elements of each long chain and the network elements on the loop where the long chain is located, so as to complete looping optimization of access layer devices of the PTN networking.

As a specific embodiment, in the PTN-based system for optimization of looping of access layer devices of the present invention, the optical fiber addition module 504 specifically comprises:
a lowermost network element and a previous network element acquisition unit, which are configured to acquire the lowermost network element of the i-th long chain and the previous network element of the cross network element; and the cross network element is the network element at a cross position of the i-th long chain and the loop where the i-th long chain is located;
a distance requirement judgment unit, which is configured to judge whether a distance between the lowermost network element of the i-th long chain and the previous network element of the cross network element meets the distance requirement;
a port judgment unit, which is configured to judge whether there is a port corresponding to an optical fiber rate between the cross network element and the previous network element of the cross network element on the lowermost network element of the i-th long chain when the distance between the lowermost network element of the i-th long chain and the previous network element of the cross network element meets the distance requirement;
an optical fiber addition unit, which is configured to add the optical fibers between the lowermost network element of the i-th long chain and the previous network element of the cross network element when there is the port corresponding to the optical fiber rate between the cross network element and the previous network element of the cross network element on the lowermost network element of the i-th long chain;
a next network element acquisition unit, which is configured to acquire the next network element of the cross network element when there is no port corresponding to the optical fiber rate between the cross network element and the previous network element of the cross network element on the lowermost network element of the i-th long chain, or when the distance between the lowermost network element of the i-th long chain and the previous network element of the cross network element does not meet the distance requirement;
the distance requirement judgment unit is further configured to judge whether the distance between the lowermost network element of the i-th long chain and the next network element of the cross network element meets the distance requirement;
the port judgment unit is further configured to judge whether there is the port corresponding to an optical fiber rate between the cross network element and the next network element of the cross network element on the lowermost network element of the i-th long chain when the distance between the lowermost network element of the i-th long chain and the next network element of the cross network element meets the distance requirement;
the optical fiber addition unit is further configured to add the optical fibers between the lowermost network element of the i-th long chain and the next network element of the cross network element when there is the port corresponding to the optical fiber rate between the cross network element and the next network element of the cross network element on the lowermost network element of the i-th long chain; add the port corresponding to the optical fiber rate between the cross network element and the next network element of the cross network element to the lowermost network element of the i-th long chain and add the optical fibers between the lowermost network element of the i-th long chain and the next network element of the cross network element when there is no port corresponding to the optical fiber rate between the cross network element and the next network element of the cross network element on the lowermost network element of the i-th long chain; and add the optical fibers between other network elements except the lowermost network element of the i-th long chain and other network elements except the previous network element and the next network element of the cross network element on the loop where the i-th long chain is located under the premise that the gain of the added optical fibers is positive and the distance meets the distance requirement when the distance between the lowermost network element of the i-th long chain and the next network element of the cross network element does not meet the distance requirement.

As a specific embodiment, in the PTN-based system for optimization of looping of access layer devices of the present invention, the first service switching module 505 specifically comprises:
a first service switching unit, which is configured to switch the services of the optical fiber passing through the middle of the first network element and the second network element to the added optical fibers.

As a specific embodiment, in the PTN-based system for optimization of looping of access layer devices of the present invention, the second service switching module 506 specifically comprises:
a third network element acquisition unit, which is configured to acquire a third network element corresponding to the optical fiber with a maximum gain; wherein the third network element is the network element connected to the optical fiber with the maximum gain on the i-th long chain;
a second service switching unit, which is configured to switch the services of the optical fiber passing through the middle of the third network element and a fourth network element to the optical fiber with the maximum gain; wherein the fourth network element is a next-hop network element that the third network element performs service transmission in the direction of the cross network element.

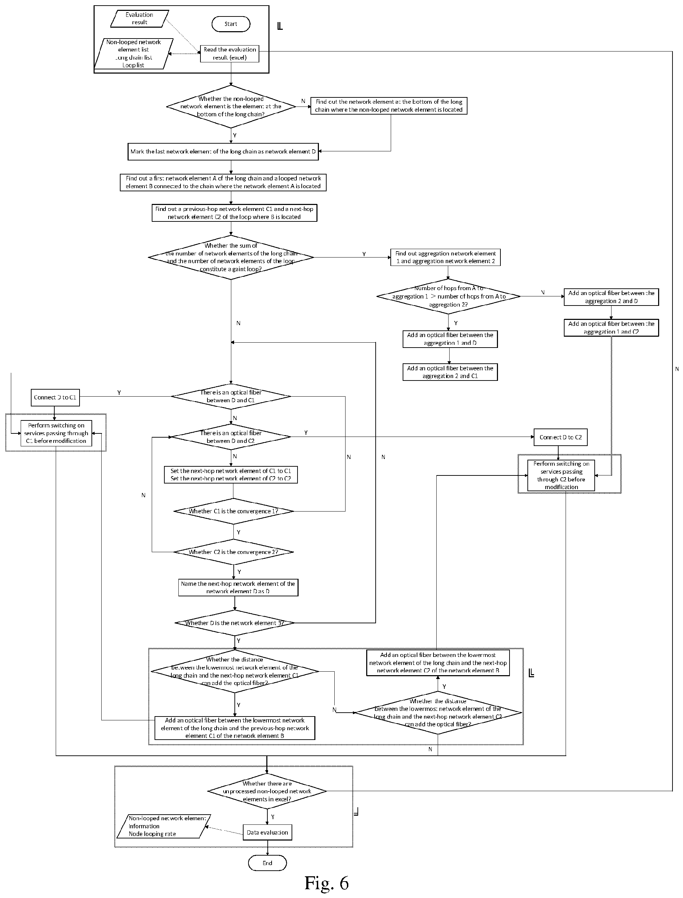

A specific example is provided below to further illustrate the above solution of the present invention. As shown in Fig. 6, the following processes are comprised:
(1) Collecting PTN network resource information and calculating the loop rate. The collection of the PTN network resource information is the only way to generate the PTN network topology. The PTN network resource information collected in box ① in Fig. 6 is output in the form of excel. The looping rate is the number of non-looped network elements divided by the total number of network elements of access layers.
(2) Obtaining the available optical fiber information and the gain thereof. As shown in the unmarked part in Fig. 6, according to the network element name of the non-looped network elements in the collected PTN looped and non-looped network element information, the long chains where each non-looped network element is located are searched in the long chain information where the non-looped network elements are located, and then the loop where each long chain is located is searched in the loop information where the long chains are located.
(3) Performing the operation of adding the optical fibers. As shown in box ② in Fig. 6, when all the network elements of the long chain are traversed in the above step (2), when the set recording the optical fiber and the gain of the optical fiber is empty, the operation of adding the optical fibers needs to be performed to make the network elements on the long chain form a loop.
(4) Performing service switching.
(5) Evaluating the data and recalculating the looping rate. As shown in box ③ in Fig. 6, after all the non-looped network elements have been traversed once, the modified data is evaluated again to obtain the new PTN network resource information, then the looping rate is calculated again, and then the looping rate before and after modification is compared. This embodiment is based on the implementation of the Huangshi network management system, and the looping rate is increased from the original 66% to 83%, which has a good effect.

The various embodiments in this specification are described in a progressive manner, and each embodiment focuses on the differences from other embodiments, and the same and similar parts between the various embodiments can be referred to each other. For the system disclosed in the embodiment, since the system corresponds to the method disclosed in the embodiment, the description is relatively simple, and the relevant part can be referred to the description of the method.

The principles and implementations of the present invention are described herein using specific examples, and the descriptions of the above embodiments are only used to help understand the methods and core ideas of the present invention; at the same time, for those skilled in the art, according to the idea of the present invention, there will be changes in the specific embodiments and application scopes. In conclusion, the contents of this specification should not be construed as limiting the present invention.

## Claims

1. A packet transport network (PTN)-based method for optimization of looping of access layer devices, comprising the following steps:
acquiring network resource information of PTN networking; wherein the network resource information comprises PTN network element information, link information where a non-looped network element is located and loop information where a long chain is located; the PTN network element information comprises network element parameters, service usage classification and network element evaluation results, and whether each network element forms a loop is displayed in the network element evaluation results; the link information where the non-looped network element is located comprises link parameters and link evaluation results, and whether each link is a long chain is displayed in the link evaluation results; and the loop information where the long chain is located comprises loop parameters and loop evaluation results, and whether each loop is a giant loop is displayed in the loop evaluation results;
for an i-th long chain, determining whether there is an optical fiber connected between each network element on the i-th long chain and each network element on a loop where the i-th long chain is located according to the network resource information of the PTN networking;
calculating the gain gₘₙ of the optical fiber when there is the optical fiber between the m-th network element on the i-th long chain and the n-th network element on the loop where the i-th long chain is located;
adding the optical fibers between the network elements of the i-th long chain and the network elements of the loop where the i-th long chain is located when the gain of each of the optical fibers is non-positive value, or when there is no optical fiber between all the network elements of the i-th long chain and all the network elements of the loop where the i-th long chain is located;
performing switching on services passing through a first network element and a second network element on the i-th long chain according to the added optical fibers; wherein the first network element is the network element connected to the added optical fibers, and the second network element is a next-hop network element that the first network element performs service transmission in a direction of a cross network element; and the cross network element is the network element at a cross position of the i-th long chain and the loop where the i-th long chain is located;
performing switching on services of the optical fibers between the network elements on the i-th long chain and the network elements on the loop where the i-th long chain is located according to the gain of each of the optical fibers when the gains of all the optical fibers are not all non-positive values; and
successively performing switching on services of the optical fibers between the network elements of each long chain and the network elements on the loop where the long chain is located, so as to complete looping optimization of access layer devices of the PTN networking.

2. The PTN-based method for optimization of looping of access layer devices according to claim 1, wherein the network element parameters comprise network element level, network element name, network element type and network element IP; the link parameters comprise link ID, link node, and number of link nodes; and the loop parameters comprise loop ID, loop node, number of loop nodes, and loop master rate.

3. The PTN-based method for optimization of looping of access layer devices according to claim 1, wherein the step of adding the optical fibers between the network elements of the i-th long chain and the network elements of the loop where the i-th long chain is located when the gain of each of the optical fibers is non-positive value, or when there is no optical fiber between all the network elements of the i-th long chain and all the network elements of the loop where the i-th long chain is located specifically comprises the following steps:
acquiring the lowermost network element of the i-th long chain and the previous network element of the cross network element;
determining whether a distance between the lowermost network element of the i-th long chain and the previous network element of the cross network element meets the distance requirement;
determining whether there is a port corresponding to an optical fiber rate between the cross network element and the previous network element of the cross network element on the lowermost network element of the i-th long chain when the distance between the lowermost network element of the i-th long chain and the previous network element of the cross network element meets the distance requirement;
adding the optical fibers between the lowermost network element of the i-th long chain and the previous network element of the cross network element when there is the port corresponding to the optical fiber rate between the cross network element and the previous network element of the cross network element on the lowermost network element of the i-th long chain;
acquiring the next network element of the cross network element when there is no port corresponding to the optical fiber rate between the cross network element and the previous network element of the cross network element on the lowermost network element of the i-th long chain, or when the distance between the lowermost network element of the i-th long chain and the previous network element of the cross network element does not meet the distance requirement;
determining whether the distance between the lowermost network element of the i-th long chain and the next network element of the cross network element meets the distance requirement;
determining whether there is the port corresponding to the optical fiber rate between the cross network element and the next network element of the cross network element on the lowermost network element of the i-th long chain when the distance between the lowermost network element of the i-th long chain and the next network element of the cross network element meets the distance requirement;
adding the optical fibers between the lowermost network element of the i-th long chain and the next network element of the cross network element when there is the port corresponding to the optical fiber rate between the cross network element and the next network element of the cross network element on the lowermost network element of the i-th long chain;
adding the port corresponding to the optical fiber rate between the cross network element and the next network element of the cross network element to the lowermost network element of the i-th long chain and adding the optical fibers between the lowermost network element of the i-th long chain and the next network element of the cross network element when there is no port corresponding to the optical fiber rate between the cross network element and the next network element of the cross network element on the lowermost network element of the i-th long chain; and
adding the optical fibers between other network elements except the lowermost network element of the i-th long chain and other network elements except the previous network element and the next network element of the cross network element on the loop where the i-th long chain is located under the premise that the gain of the added optical fibers is positive and the distance meets the distance requirement when the distance between the lowermost network element of the i-th long chain and the next network element of the cross network element does not meet the distance requirement.

4. The PTN-based method for optimization of looping of access layer devices according to claim 1, wherein the step of performing switching on services passing through a first network element and a second network element on the i-th long chain according to the added optical fibers comprises the following steps:
switching the services of the optical fiber passing through the middle of the first network element and the second network element to the added optical fibers.

5. The PTN-based method for optimization of looping of access layer devices according to claim 1, wherein the step of performing switching on services of the optical fibers between the network elements on the i-th long chain and the network elements on the loop where the i-th long chain is located according to the gain of each of the optical fibers when the gains of all the optical fibers are not all non-positive values comprises the following steps:
acquiring a third network element corresponding to the optical fiber with a maximum gain; wherein the third network element is the network element connected to the optical fiber with the maximum gain on the i-th long chain;
switching the services of the optical fiber passing through the middle of the third network element and a fourth network element to the optical fiber with the maximum gain; wherein the fourth network element is a next-hop network element that the third network element performs service transmission in the direction of the cross network element.

6. A packet transport network (PTN)-based system for optimization of looping of access layer devices, comprising:
a network resource information acquisition module, which is configured to acquire network resource information of PTN networking; wherein the network resource information comprises PTN network element information, link information where a non-looped network element is located and loop information where a long chain is located; the PTN network element information comprises network element parameters, service usage classification and network element evaluation results, and whether each network element forms a loop is displayed in the network element evaluation results; the link information where the non-looped network element is located comprises link parameters and link evaluation results, and whether each link is a long chain is displayed in the link evaluation results; and the loop information where the long chain is located comprises loop parameters and loop evaluation results, and whether each loop is a giant loop is displayed in the loop evaluation results;
an optical fiber judgment module, which is configured to, for an i-th long chain, judge whether there is an optical fiber connected between each network element on the i-th long chain and each network element on a loop where the i-th long chain is located according to the network resource information of the PTN networking;
an optical fiber gain calculation module, which is configured to calculate the gain gₘₙ of the optical fiber when there is the optical fiber between the m-th network element on the i-th long chain and the n-th network element on the loop where the i-th long chain is located;
an optical fiber addition module, which is configured to add the optical fibers between the network elements of the i-th long chain and the network elements of the loop where the i-th long chain is located when the gain of each of the optical fibers is non-positive value, or when there is no optical fiber between all the network elements of the i-th long chain and all the network elements of the loop where the i-th long chain is located;
a first service switching module, which is configured to perform switching on services passing through a first network element and a second network element on the i-th long chain according to the added optical fibers; wherein the first network element is the network element connected to the added optical fibers, and the second network element is a next-hop network element that the first network element performs service transmission in a direction of a cross network element; and the cross network element is the network element at a cross position of the i-th long chain and the loop where the i-th long chain is located;
a second service switching module, which is configured to perform switching on services of the optical fibers between the network elements on the i-th long chain and the network elements on the loop where the i-th long chain is located according to the gain of each of the optical fibers when the gains of all the optical fibers are not all non-positive values; and
a looping optimization module, which is configured to successively perform switching on services of the optical fibers between the network elements of each long chain and the network elements on the loop where the long chain is located, so as to complete looping optimization of access layer devices of the PTN networking.

7. The PTN-based system for optimization of looping of access layer devices according to claim 6, wherein the optical fiber addition module specifically comprises:
a lowermost network element and a previous network element acquisition unit, which are configured to acquire the lowermost network element of the i-th long chain and the previous network element of the cross network element; and the cross network element is the network element at a cross position of the i-th long chain and the loop where the i-th long chain is located;
a distance requirement judgment unit, which is configured to judge whether a distance between the lowermost network element of the i-th long chain and the previous network element of the cross network element meets the distance requirement;
a port judgment unit, which is configured to judge whether there is a port corresponding to an optical fiber rate between the cross network element and the previous network element of the cross network element on the lowermost network element of the i-th long chain when the distance between the lowermost network element of the i-th long chain and the previous network element of the cross network element meets the distance requirement;
an optical fiber addition unit, which is configured to add the optical fibers between the lowermost network element of the i-th long chain and the previous network element of the cross network element when there is the port corresponding to the optical fiber rate between the cross network element and the previous network element of the cross network element on the lowermost network element of the i-th long chain;
a next network element acquisition unit, which is configured to acquire the next network element of the cross network element when there is no port corresponding to the optical fiber rate between the cross network element and the previous network element of the cross network element on the lowermost network element of the i-th long chain, or when the distance between the lowermost network element of the i-th long chain and the previous network element of the cross network element does not meet the distance requirement;
the distance requirement judgment unit is further configured to judge whether the distance between the lowermost network element of the i-th long chain and the next network element of the cross network element meets the distance requirement;
the port judgment unit is further configured to judge whether there is the port corresponding to an optical fiber rate between the cross network element and the next network element of the cross network element on the lowermost network element of the i-th long chain when the distance between the lowermost network element of the i-th long chain and the next network element of the cross network element meets the distance requirement;
the optical fiber addition unit is further configured to add the optical fibers between the lowermost network element of the i-th long chain and the next network element of the cross network element when there is the port corresponding to the optical fiber rate between the cross network element and the next network element of the cross network element on the lowermost network element of the i-th long chain; add the port corresponding to the optical fiber rate between the cross network element and the next network element of the cross network element to the lowermost network element of the i-th long chain and add the optical fibers between the lowermost network element of the i-th long chain and the next network element of the cross network element when there is no port corresponding to the optical fiber rate between the cross network element and the next network element of the cross network element on the lowermost network element of the i-th long chain; and add the optical fibers between other network elements except the lowermost network element of the i-th long chain and other network elements except the previous network element and the next network element of the cross network element on the loop where the i-th long chain is located under the premise that the gain of the added optical fibers is positive and the distance meets the distance requirement when the distance between the lowermost network element of the i-th long chain and the next network element of the cross network element does not meet the distance requirement.

8. The PTN-based system for optimization of looping of access layer devices according to claim 6, wherein the first service switching module specifically comprises:
a first service switching unit, which is configured to switch the services of the optical fiber passing through the middle of the first network element and the second network element to the added optical fibers.

9. The PTN-based system for optimization of looping of access layer devices according to claim 6, wherein the second service switching module specifically comprises:
a third network element acquisition unit, which is configured to acquire a third network element corresponding to the optical fiber with a maximum gain; wherein the third network element is the network element connected to the optical fiber with the maximum gain on the i-th long chain;
a second service switching unit, which is configured to switch the services of the optical fiber passing through the middle of the third network element and a fourth network element to the optical fiber with the maximum gain; wherein the fourth network element is a next-hop network element that the third network element performs service transmission in the direction of the cross network element.
